# EUROPEAN PATENT APPLICATION

(11) **EP 3 311 645 A1**
(43) Date of publication of application: **25.04.2018**
(21) Application number: 16811966.7
(22) Date of filing: 17.06.2016
(51) Int. Cl.: A01D 34/84, A01D 34/416

(54) **SHOCK-ABSORPTION TYPE MOWER SAFETY BLADE UNIT HAVING PROTECTOR MOUNTED THEREON**

(30) Priority: 17.06.2015 KR 20150086069; 21.08.2015 KR 20150118202
(71) Applicant: Hwang, Seung Hee, Gwangju 62322 (KR)
(72) Inventor: Hwang, Seung Hee, Gwangju 62322 (KR)
(74) Representative: Peters, Sebastian Martinus
(86) International application number: PCT/KR2016/006445
(87) International publication number: WO 2016/204553

(57) **Abstract**

The present invention relates to a shock-absorption type mower safety blade unit having a protector mounted thereon, the safety blade unit comprising: a housing fixed to a driving shaft of a driving part, provided at the end portion of an operating bar of a mower, so as to rotate together with the driving shaft; a plurality of cutter parts, which are provided at the housing, and project to the outside of the housing so as to cut weeds according to the rotation of the housing and retract to the inside of the housing so as to prevent breakage when colliding with obstacles; and an elastic part for providing elastic force to the cutter parts such that the cutter parts can return by projecting outwards when the cutter parts retract into the housing. The shock-absorption type mower safety blade unit having a protector mounted thereon, according to the present invention, prevents pebbles from being scattered or the cutter parts from being damaged because of the cutter parts retracting to the inside of the housing when colliding with the pebbles or a structure, since the cutter parts are provided to be retractable into the housing and the elastic part supports the cutter parts such that the cutter parts project outward from the housing, and improves mowing efficiency by hitting plants with greater force due to the elastic force provided from the elastic part, when colliding with large plants.

## Description

### TECHNICAL FIELD

The present invention relates to a protector-equipped shock absorption type mower safety blade unit, and more particularly, to a protector-equipped shock absorption type mower safety blade unit that is installed at a drive shaft of a mower, and thus performs a mowing operation while being rotated with the drive shaft.

### BACKGROUND ART

Generally, mowers are used to remove weeds that grow on the ridges between rice paddies or fields, and weeds that grow on graves and therearound.

Korean Registered Patent Publication No. 10-1030251, which is prior art, discloses a mowing apparatus. The mowing apparatus includes: a rotary disk configured to support the back of a mower knife when the mower knife is turned backward by strong impact during mowing to absorb the impact and having a rhomboidal shape; and the mower knife including an upper blade and a lower blade longer than the upper blade.

Korean Registered Utility Model Publication No. 20-0393125 discloses a blade for a mower. The blade for a mower is configured such that a plurality of blades is radially installed at a lower surface of a disk part having a fastening hole formed at a center thereof to be coupled with a rotary shaft, wherein one end of each blade is fixed by a rivet to be spreadable by centrifugal force.

In addition, Korean Registered Patent Publication No. 10-1317832 discloses a mower blade. In addition, Korean Registered Patent Publication No. 10-1469821 discloses an easily replaceable mower. The mower blade includes a cutting blade installed at an end portion of a working rod to be rotatable with a rotary body such that, when the rotary body is rotated, the end portion protrudes outside of the rotary body by centrifugal force.

As described above, in the case of blades for a mower that are rotatably installed at a main body and protrude by centrifugal force of the main body, when the main body is rotated at a low speed or the blades collide with a large plant, the blades are folded into the main body, and thus a mowing operation is not smoothly performed. In addition, to increase a cutting force acting on a plant, the weight of the blades or a rotation speed of the main body may be increased. In this case, the cutting force is improved, but, when the blades collide with a hard foreign material, the blades are broken or the foreign material or fragments of the blades are scattered, resulting in occurrence of accidents.

### DISCLOSURE OF THE INVENTION

### TECHNICAL PROBLEM

Therefore, the present invention has been made in view of the above problems, and it is one object of the present invention to provide a protector-equipped shock absorption type mower safety blade unit capable of enhancing a cutting force by applying elastic force to a cutter rotatably installed at a housing.

### TECHNICAL SOLUTION

In accordance with one aspect of the present invention, provided is a protector-equipped shock absorption type mower safety blade unit including: a housing fixed to a drive shaft of a drive unit installed at an end portion of a working rod of a mower to be rotated with the drive shaft;
a plurality of cutter parts arranged in the housing and configured to protrude outside of the housing to cut weeds according to rotation of the housing and to be introduced into the housing upon collision with an obstacle not to be broken; and
a plurality of elastic parts arranged at the cutter parts, and configured to provide the cutter parts with elastic force so as for the cutter parts introduced into the housing to protrude and returns to the outside.

Each elastic part includes a support portion having an end supported by the housing, and an elastic portion extending from another end of the support portion and configured into a spiral shape by being wound at least once to have predetermined elasticity, and the cutter parts extend outside of the housing from the respective elastic portions to cut weeds according to rotation of the housing.

Each cutter part has, in an end portion thereof, a through-hole through which an installation rod formed in the housing passes, and a cutting blade at another end portion thereof.

In accordance with another aspect of the present invention, provided is a protector-equipped shock absorption type mower safety blade unit including: a housing fixed to a drive shaft of a drive unit installed at an end portion of a working rod of a mower to be rotated with the drive shaft, and including a lower cover provided with installation rods formed in a circumferential direction of the lower cover and a coupling plate coupled to the lower cover;
a cutter part protruding outside of the housing to cut weeds according to rotation of the housing, configured to be rotated to be introduced into the housing upon collision with an obstacle not to be broken, and having a through-hole in an end thereof to allow each installation rod to pass therethrough and a cutting blade at another end thereof; and
an elastic part including a support portion supported by the housing, an elastic portion extending from the support portion and wound at least once to allow the installation rod formed in the housing to be inserted thereinto, and a coupling portion extending from the elastic portion and inserted into a long hole formed in the cutter part.

### ADVANTAGEOUS EFFECTS

A protector-equipped shock absorption type mower safety blade unit according to the present invention is configured such that a housing is rotated in a state in which a cutter part protrudes, the cutter part is introduced into the housing by impact upon collision with a hard foreign material during a mowing operation, and automatically returns to the outside by elastic force of an elastic part, and thus blades hit a plant using a stronger force by the elastic force applied from the elastic part, whereby moving efficiency is improved.

In addition, in the present invention, the cutter part may be made of a relatively small and lightweight material, and thus, when the cutter part collides with a foreign substance, impact applied thereto is relatively low, and, accordingly, the cutter part is safe.

In addition, in the present invention, as described above, the cutter part is introduced into the housing upon collision with a hard foreign substance, and thus damage to the cutter part or splattering of the foreign substance or a part of blades over an operator is prevented, and, accordingly, it is safe.

In addition, in the present invention, although the housing is rotated at a low speed, a cutting force acting on a plant is high and thus maintenance costs are reduced, and the cutting part and the housing can be made of a relatively small and lightweight material, and thus a total weight thereof is relatively small, which enables an operator to easily carry the same.

In addition, the present invention is advantageous in that the cutter part is relatively cheap and can be replaced when worn out, and thus maintenance costs are reduced.

### DESCRIPTION OF THE DRAWINGS

FIG. 1 is a perspective view of a protector-equipped shock absorption type mower safety blade unit according to the present invention.
FIG. 2 is an exploded perspective view of the protector-equipped shock absorption type mower safety blade unit of FIG. 1.
FIG. 3 is a cross-sectional view illustrating an operation state of the protector-equipped shock absorption type mower safety blade unit of FIG. 1.
FIG. 4 is an exploded perspective view of a protector-equipped shock absorption type mower safety blade unit according to another embodiment of the present invention.
FIG. 5 is a cross-sectional view illustrating an operation state of the protector-equipped shock absorption type mower safety blade unit of FIG. 4.
FIG. 6 is an exploded perspective view of a protector-equipped shock absorption type mower safety blade unit according to another embodiment of the present invention.
FIG. 7 is a cross-sectional view illustrating an operation state of the protector-equipped shock absorption type mower safety blade unit of FIG. 6.
FIG. 8 is an exploded perspective view of a protector-equipped shock absorption type mower safety blade unit according to another embodiment of the present invention.
FIG. 9 is a cross-sectional view of a protector-equipped shock absorption type mower safety blade unit according to another embodiment of the present invention.
FIG. 10 is a cross-sectional view of a protector-equipped shock absorption type mower safety blade unit according to another embodiment of the present invention.
FIG. 11 is an exploded perspective view of a protector-equipped shock absorption type mower safety blade unit according to another embodiment of the present invention.
FIG. 12 is an exploded perspective view of a protector-equipped shock absorption type mower safety blade unit according to another embodiment of the present invention.

### MODE

A protector-equipped shock absorption type mower safety blade unit according to the present invention will now be described in more detail.

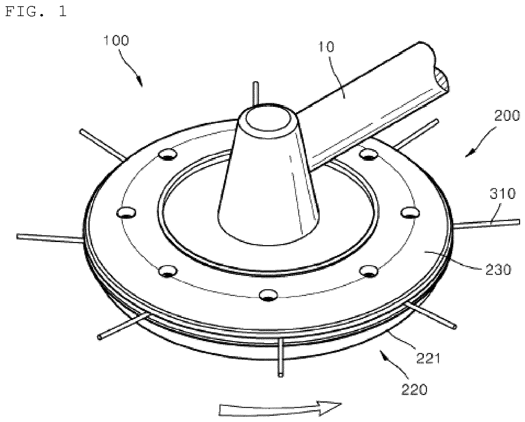

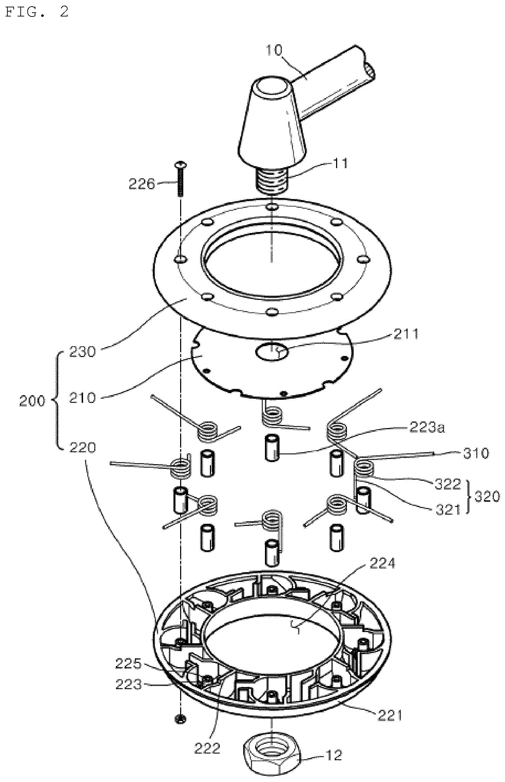

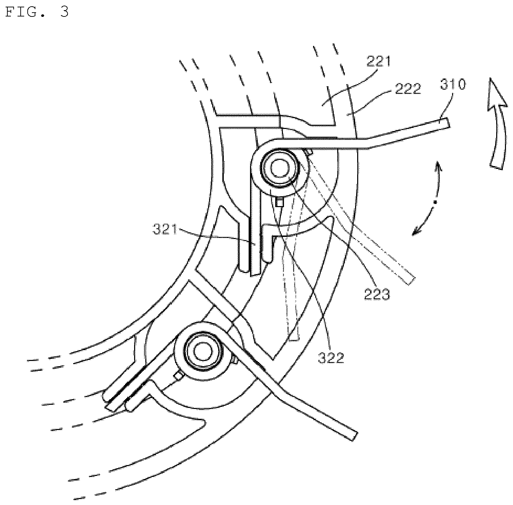

FIGS. 1 to 3 illustrate a protector-equipped shock absorption type mower safety blade unit 100 according to the present invention.

Referring to the drawings, the protector-equipped shock absorption type mower safety blade unit 100 is installed at a working rod 10 of a mower to cut weeds, and is installed in a drive unit arranged at an end portion of the working rod 10 of a mower. The drive unit includes a drive shaft 11 rotatably installed at a front end portion of the working rod 10, and a driving motor configured to rotate the drive shaft 11.

The protector-equipped shock absorption type mower safety blade unit 100 according to the present invention includes a housing 200 fixed to the drive shaft 11 of the drive unit installed at an end portion of the working rod 10 to be rotated with the drive shaft 11, a plurality of cutter parts 310 arranged in the housing 200 and configured to protrude outside of the housing 200 to cut weeds according to rotation of the housing 200 and to be introduced into the housing 200 upon collision with an obstacle not to be broken, and a plurality of elastic parts 320 installed in the housing 200 and configured to elastically support the cutter parts 310 so that the cutter parts 310 protrude outside of the housing 200.

The housing 200 includes a coupling plate 210 installed at the drive shaft 11, and a lower cover 220 installed at a lower portion of the coupling plate 210. In addition, a cover member 230 coupled to the lower cover 220 together with the coupling plate 210 is provided on an upper side of the coupling plate 210.

The coupling plate 210 is configured into a disk shape having a predetermined thickness, and has, in a central portion thereof, a coupling hole 211 configured to vertically pass therethrough to allow the drive shaft 11 to be inserted thereinto. The coupling plate 210 is fixed to the drive shaft 11 by fastening an end portion of the drive shaft 11, passing the coupling plate 210 through the coupling hole 211, with a coupling nut 12 so that the coupling plate 210 rotates with the drive shaft 11. The coupling plate 210 may be coupled to the lower cover 220 by insert-molding.

The coupling plate 210 having the above-described structure may be made of a metallic or non-metallic material having a predetermined strength to rigidly maintain an external appearance thereof even upon collision with an obstacle.

The lower cover 220 includes a base plate 221 having a hollow hole 224 in a center thereof to allow the drive shaft 11 to be located therethrough, and a support part 222 extending along an edge of the hollow hole 224 and extending upward from the base plate 221 to support the coupling plate 210.

The base plate 221 is configured into an annular shape having a predetermined outer diameter, has a predetermined strength, and is made of a synthetic resin material with high formability such as plastic. The base plate 221 includes a plurality of installation rods 223 at an upper surface thereof to allow the elastic parts 320 to be coupled thereto, and a bush member 223a having a cylindrical shape is inserted into each installation rod 223.

The installation rods 223 are spaced apart from each other with respect to a center of the base plate 221 in a circumferential direction. In addition, the installation rods 223 protrude upward from the upper surface of the base plate 221, and an upper end portion of each installation rod 223 may extend to be positioned at the same height as that of an upper surface of the support part 222 so that the upper surface of the base plate 221 can be supported by a lower surface of the coupling plate 210.

In this regard, a fastening hole 225 is formed in an upper surface of each installation rod 223 to be fastened with a fixing bolt 226 passing through the coupling plate 210. The fastening hole 225 is formed with a predetermined depth downward from the upper surface of the installation rod 223 and has threads at an inner circumferential surface thereof to allow the fixing bolt 226 to be screw-coupled thereto.

Meanwhile, the base plate 221 is installed at a position separate forward from a rotary cutter with respect to a rotation direction of the housing 200, and may be provided with a plurality of shielding blocks (not shown) configured to interfere with the cutter parts 310 to prevent the rotary cutter from being introduced into the housing 200 by being deformed forward. That is, the shielding blocks interfere with the cutter parts 310 to prevent elastic portions 322 of the elastic parts 320, which will be described below, from spreading beyond a critical point. The shielding blocks may be configured to protrude upward from the upper surface of the base plate 221 on a front side of the installation rods 223 with respect to the rotation direction of the housing 200.

The elastic parts 320 are respectively installed at the bush members 223a inserted into the installation rods 223 formed in the base plate 221. The elastic part 320 includes a support portion 321 having an end supported by the housing 200, and an elastic portion 322 extending from another end of the support portion 321 and configured into a spiral shape by being wound several times on the bush member 223a arranged in the housing 200 to have predetermined elasticity.

The end of the support portion 321 contacts a side surface of the support part 222, and the other end thereof extends in a direction adjacent to the installation rod 223. Although not shown in the drawings, the base plate 221 may be provided, at an upper surface thereof, with a support block having an insertion groove formed at an upper surface thereof to allow the support portion 321 to be inserted thereinto.

The elastic portion 322 extends from the other end of the support portion 321, and is configured into a spiral shape by being wound several times on an outer circumferential surface of the bush member 223a inserted into the installation rod 223. The elastic part 320 may be made of a material having predetermined elasticity. Elastic force generated by the spirally formed elastic portion 322 is applied to the cutter parts 310.

Meanwhile, although the illustrated embodiments provide a structure in which the elastic parts 320 are fixed to the bush members 223a inserted into the installation rods 223, the elastic parts 320 are not limited to the illustrated embodiments, and only the support portions 321 may be fixed to the lower cover 220.

The cutter parts 310 are configured to protrude and extend outside of the base plate 221 from the elastic portions 322 to cut weeds according to rotation of the housing 200. End portions of the cutter parts 310 may be configured to be bent at a predetermined angle in a direction in which the housing 200 rotates. As described above, since the end portions of the cutter parts 310 are bent, cutting of weeds may be more efficiently performed.

In the protector-equipped shock absorption type mower safety blade unit 100 according to the present invention having the above-described structure, when the housing 200 is rotated, the cutter parts 310 protrude outside of the housing 200 to cut weeds. At this time, the cutter parts 310 are deformed to be introduced into the housing 200, and the elastic parts 320 support the respective cutter parts 310 to protrude outside of the housing 200, and thus, when the cutter parts 310 collide with pebbles or a structure, the cutter parts 310 are introduced into the housing 200, and thus scattering of pebbles or damage to the cutter parts 310 is prevented. In addition, when the cutter parts 310 collide with a large plant, the plant is hit by a greater force due to the elastic force applied by the elastic parts 320, and thus mowing efficiency is enhanced.

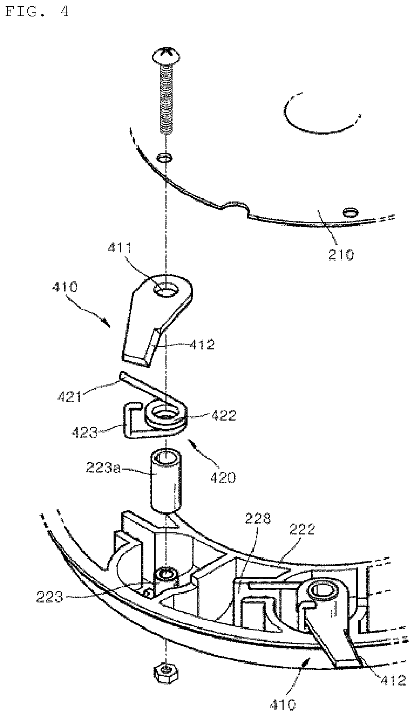

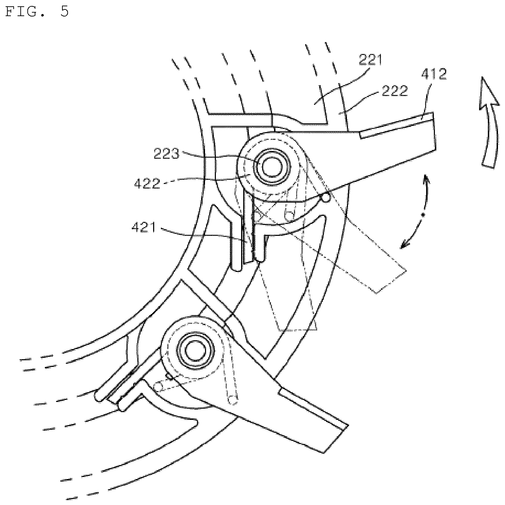

Meanwhile, FIGS. 4 and 5 illustrate cutter parts 410 and elastic parts 420 according to another embodiment of the present invention.

Elements having the same function as those in the previous drawings denote like reference numerals.

Referring to the drawings, the cutter parts 410 are rotatably installed at the housing 200 to allow end portions thereof to protrude outside of the housing 200. Each cutter part 410 is made of a metal plate, and has, in an end thereof, a through-hole 411 to allow the bush member 223a inserted into the installation rod 223 to pass therethrough so that the cutter part 410 is rotatable about the installation rod 223. At this time, to more efficiently cut weeds, another end portion of each cutter part 410 may be configured to be bent at a predetermined angle forward with respect to a rotation direction of the housing 200.

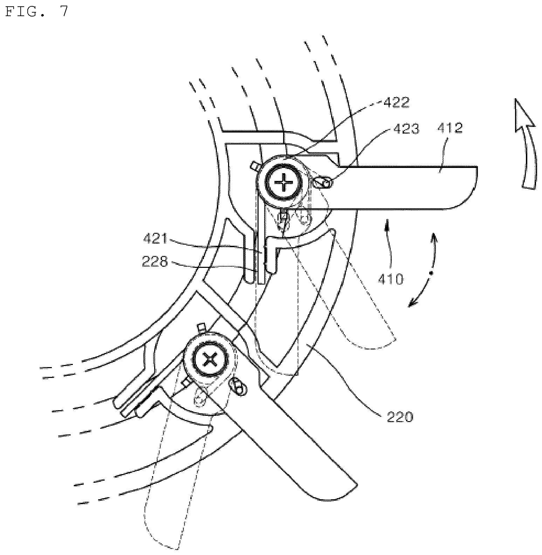

In addition, the cutter part 410 has, at the front of another end portion thereof, a cutting blade 412 configured to apply a stronger cutting force to weeds. As illustrated in FIG. 7, the cutting blade 412 may be formed at front and rear end portions of the cutter part 410.

The elastic part 420 includes a support portion 421 having an end supported by the housing 200, an elastic portion 422 extending from another end of the support portion 421 and configured into a spiral shape by being wound at least once on the installation rod 223 arranged in the housing 200 to have predetermined elasticity, and a coupling portion 423 formed at an end portion of the elastic portion 422 and supported by the cutter part 410.

One end of the support portion 421 contacts a side surface of the support part 222, and another end thereof extends in a direction adjacent to the installation rod 223.

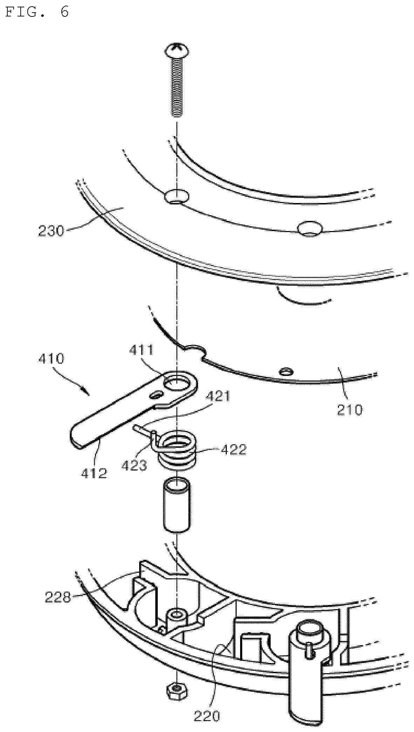

As illustrated in FIGS. 6 and 7, the support portion 421 of the elastic part 420 is inserted into and supported by a support groove 228 formed using separate ribs at the lower cover 220, and the coupling portion 423 of the elastic part 420 may be inserted into and supported by a long hole 415 formed in the cutting part 410. In this case, there is no need to form a shielding block 227 at the lower cover 220 of the housing 200. That is, since the support portion 421 and the coupling portion 423 of the elastic part 420 are in supported states, the cutter part 410 maintains a state of radially protruding from the housing 200.

In the above embodiments, the elastic portion 422 extends from the other end of the support portion 421, and spirally extends by being wound at least once on an outer circumferential surface of the installation rod 223 or the bush member 223a inserted thereinto.

Although the illustrated embodiments provide a structure in which the elastic portion 422 is wound several times on the bush member 223a inserted into the installation rod 223, the elastic portion 422 is not limited thereto, and may be wound once on an outer circumferential surface of the installation rod 223.

The elastic part 420 may be made of a material having predetermined elasticity. Elastic force generated by the spirally formed elastic portion 422 is provided to the cutter part 410.

In the mower safety blade unit 100 having the above-described structure, when the housing 200 is rotated, the cutter parts 410 protrude outside of the housing 200 to cut weeds. At this time, the cutter parts 410 are rotatably supported by the bush members 223a inserted into the installation rods 223 to be introduced into and protrude outside of the housing 200, and the elastic parts 420 support the respective cutter parts 410 to protrude outside of the housing 200, and thus, when the cutter parts 410 collide with pebbles or a structure, the cutter parts 410 are introduced into the housing 200, and, accordingly, scattering of pebbles or damage to the cutter parts 410 is prevented. In addition, when the cutter parts 410 collide with a big plant, the cutter parts 410 hit the plant with a greater force due to the elastic force applied by the elastic part 420, and thus mowing efficiency is enhanced.

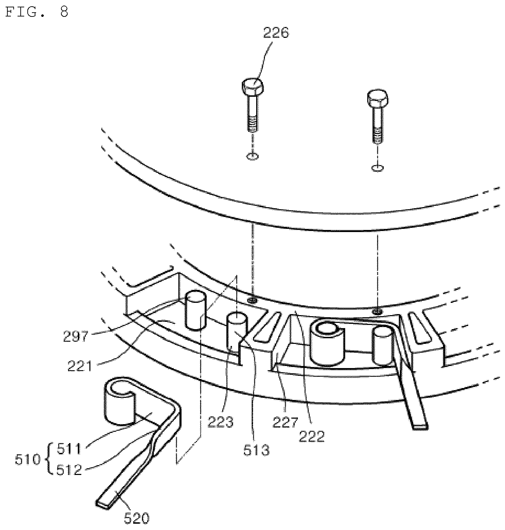

Meanwhile, FIG. 8 illustrates elastic parts 510 and cutter parts 520 according to another embodiment of the present invention.

Referring to the drawings, each elastic part 510 includes a support portion 511 having an end supported by the housing 200, and an elastic portion 512 extending from another end of the support portion 511 and installed at the installation rod 223 arranged in the housing 200 to have predetermined elasticity.

The support portion 511 is configured into a plate shape having a predetermined vertical width, the end of the support portion 511 contacts a side surface of the support part 222, and the other end of the support portion 511 extends in a direction adjacent to the installation rod 223.

Meanwhile, the end of the support portion 511 is configured to be bent to surround an outer circumferential surface of an auxiliary rod 297 formed on the base plate 221 at a position separate backward from the installation rod 223.

The elastic portion 512 extends from the other end of the support portion 511, and extends in a direction away from the support part 222 of the base plate 221. The elastic portion 512 is inserted between the installation rod 223 and the shielding block 227 and is supported by the installation rod 223. The elastic part 510 may be made of a material with predetermined elasticity. In this case, the shielding block 227 may not be separately formed.

Each cutter part 520 extends from an end portion of the elastic portion 512 and protrudes outside of the base plate 221. The cutter part 520 is configured integrally with the elastic part 510, and is configured to be twisted such that an upper end portion thereof having a small width is positioned at the front.

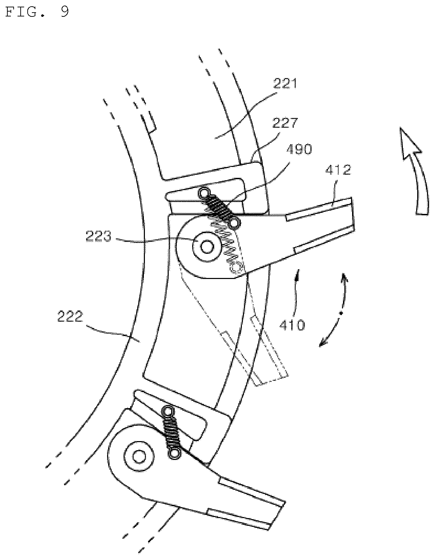

Meanwhile, FIG. 9 illustrates elastic parts 490 according to another embodiment of the present invention.

Referring to the drawing, an end of each elastic part 490 is coupled to the cutter part 410, and another end thereof is fixed to the shielding block 227. In this case, the elastic part 490 is stretched when the cutter part 410 is rotated backward with respect to the rotation direction of the housing 200, and a tensile spring that provides the cutter part 410 with elastic force in a compressed direction is applied thereto.

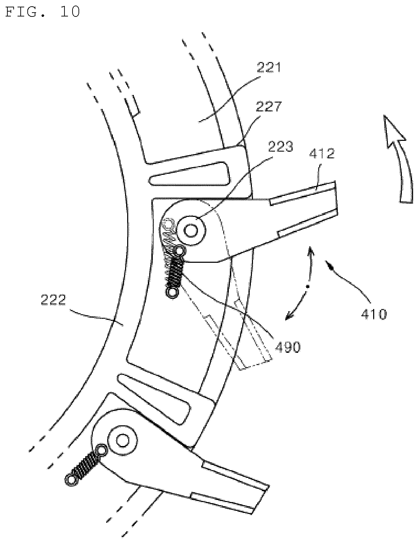

In addition, as illustrated in FIG. 10, an end of the elastic part 490 may be coupled to the cutter part 410, and another end thereof may be coupled to the base plate 221 on a rear side of the cutter part 410. In this case, an end portion of the elastic part 490 is installed at a position separate from a rotation center of the cutter part 410 towards a rotation center of the housing 200, the elastic part 490 is stretched when the cutter part 410 is rotated backward with respect to the rotation direction of the housing 200, and a tensile spring that provides the cutter part 410 with elastic force in a compressed direction is applied thereto.

Although not shown in the drawings, an end portion of the elastic part 490 is installed at a position outside of the housing 200 separate from the rotation center of the cutter part 410, the elastic part 490 is compressed when the cutter part 410 is rotated backward with respect to the rotation direction of the housing 200, and a compression spring that provides the cutter part 410 with elastic force in a stretched direction may be applied thereto.

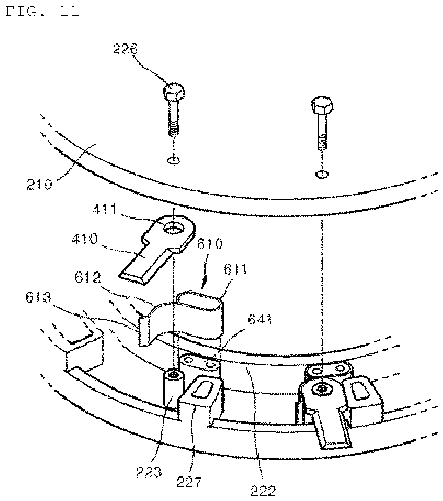

Meanwhile, FIG. 11 illustrates elastic parts 610 according to another embodiment of the present invention.

Referring to the drawing, each elastic part 610 includes a binding portion 611 coupled to a coupling protrusion 614 formed in the housing 200, and a contact portion 612 extending from the binding portion 611 to come into contact with a rear end portion of the cutter part 410 with respect to the rotation direction of the housing 200, and providing elastic force so that the cutter part 410 is rotated forward. The coupling protrusions 614 are installed at the base plate 221 at respective positions adjacent to the installation rods 223, protrude upward from a lower surface of the base plate 221, and are configured in an oval shape.

The binding portion 611 extends into an oval shape corresponding to a shape of the coupling protrusion 614 to be coupled to the coupling protrusion 614 by surrounding an outer circumferential surface thereof. The binding portion 611 may be made of a material with predetermined elasticity.

The contact portion 612 extends in a bent form from an end portion of the binding portion 611 to come into contact with a rear end portion of the cutter part 410. The contact portion 612 is configured integrally with the binding portion 611, and is provided, at an end portion thereof, with a grabbing portion 613 bent in a direction away from the cutter part 410 to enable an operator to easily bend the contact portion 612 by grabbing the grabbing portion 613.

Although the illustrated embodiment provides a structure in which the cutter part 410 has cutting blades formed at front and rear end portions thereof, the cutter part 410 may have a cutting blade only at a front end portion thereof.

When a housing is rotated, a cutter part is rotated in a state in which an end portion thereof protrudes outside of the housing by elastic force of an elastic part. At this time, when the cutter part collides with relatively large weeds, the cutter part is rotated backward at a predetermined angle, the contact portion 612 is bent backward as the cutter part is moved backward, and elastic force is generated to an extent at which the contact portion 612 is bent to be applied to the cutter part.

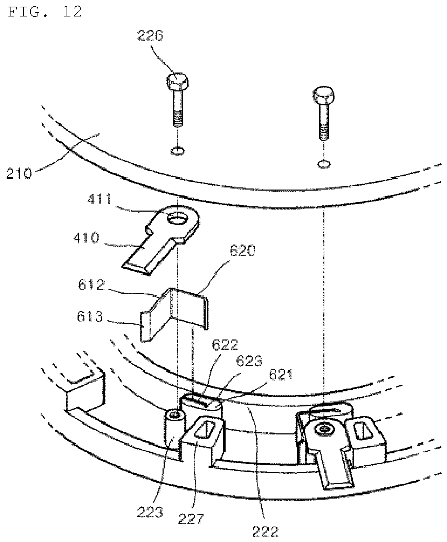

Meanwhile, FIG. 12 illustrates binding portions 620 according to another embodiment of the present invention.

Referring to the drawing, each binding portion 620 is configured to be inserted into a fixing groove 622 formed in a coupling protrusion 621. The fixing groove 622 is recessed to a predetermined depth towards a front side from an edge of a rear end portion of the coupling protrusion 621, and has an upper opening to allow the binding portion 620 to be easily inserted thereinto. In addition, the coupling protrusion 621 has, at a front end portion of the fixing groove 622, a binding groove 623 extending in a bent form in a direction away from the rotation center of the housing 200.

The binding portion 620 is configured to extend forward and backward to correspond to the fixing groove 622, and is bent in a direction away from the rotation center of the housing 200 so that a front end portion thereof is inserted into the binding groove 623. Since the front end portion of the binding portion 620 is inserted into the binding groove 623, separation of an elastic part 610 from the coupling protrusion 621 by rotation of the housing 200 is prevented.

Although not shown in the drawing, the binding groove 623 and the front end portion of the binding portion 620 may extend in a bent form in a direction adjacent to the rotation center of the housing 200.

While the present invention has been described with reference to the embodiments illustrated in the drawings, it will be understood by those of ordinary skill in the art that these embodiments are provided for illustrative purposes only and various modifications and equivalents thereto can be made.

Thus, the true scope of the present invention should be defined only by the appended claims.

## Claims

1. A protector-equipped shock absorption type mower safety blade unit comprising:
a housing fixed to a drive shaft of a drive unit installed at an end portion of a working rod of a mower to be rotated with the drive shaft;
a plurality of cutter parts arranged in the housing and configured to protrude outside of the housing to cut weeds according to rotation of the housing and to be introduced into the housing upon collision with an obstacle not to be broken; and
a plurality of elastic parts configured to provide the cutter parts with elastic force so as for the cutter parts introduced into the housing to protrude and returns to the outside.

2. The protector-equipped shock absorption type mower safety blade unit of claim 1, wherein each elastic part comprises a support portion having an end supported by the housing, and an elastic portion extending from another end of the support portion and configured into a spiral shape by being wound at least once to have predetermined elasticity, and the cutter parts extend outside of the housing from the respective elastic portions to cut weeds according to rotation of the housing.

3. The protector-equipped shock absorption type mower safety blade unit of claim 1, wherein each cutter part has, in an end portion thereof, a through-hole through which an installation rod formed in the housing passes, and a cutting blade at another end portion thereof.

4. The protector-equipped shock absorption type mower safety blade unit of claim 3, wherein each elastic part comprises a support portion supported by the housing, an elastic portion extending from the support portion and wound at least once to be inserted into a bush member of the installation rod formed in the housing, and a coupling portion extending from the elastic portion and inserted into a long hole formed in the cutter part.

5. A protector-equipped shock absorption type mower safety blade unit comprising:
a housing fixed to a drive shaft of a drive unit installed at an end portion of a working rod of a mower to be rotated with the drive shaft, and comprising a lower cover provided with installation rods formed in a circumferential direction of the lower cover and a coupling plate coupled to the lower cover;
a cutter part protruding outside of the housing to cut weeds according to rotation of the housing, configured to be rotated to be introduced into the housing upon collision with an obstacle not to be broken, and having a through-hole in an end thereof to allow each installation rod to pass therethrough and a cutting blade at another end thereof; and
an elastic part comprising a support portion supported by the housing, an elastic portion extending from the support portion and wound at least once to allow the installation rod formed in the housing to be inserted thereinto, and a coupling portion extending from the elastic portion and inserted into a long hole formed in the cutter part.

6. The protector-equipped shock absorption type mower safety blade unit of claim 5, wherein the housing has an insertion groove to allow the support portion of the elastic part to be inserted thereinto so that the support portion is inserted thereinto and supported thereby.
